# EUROPÄISCHE PATENTSCHRIFT

(11) **EP 2 788 144 B1**
(45) Veröffentlichungstag und Bekanntmachung des Hinweises auf die Patenterteilung: **17.05.2017**
(21) Anmeldenummer: 11797187.9
(22) Anmeldetag: 09.12.2011
(51) Int. Cl.: B23P 19/00, B23P 21/00, B65G 1/137, B65G 37/02, G05B 19/418, G05D 1/02

(54) **VERFAHREN ZUM BETREIBEN EINER PRODUKTIONSANLAGE**
METHOD FOR OPERATING A PRODUCTION PLANT
PROCÉDÉ POUR FAIRE FONCTIONNER UNE INSTALLATION DE PRODUCTION

(43) Veröffentlichungstag der Anmeldung: 15.10.2014
(73) Patentinhaber: Daimler AG, 70327 Stuttgart (DE)
(72) Erfinder: KLUMPP, Willi, 73760 Ostfildern (DE); REICHENBACH, Matthias, 70195 Stuttgart (DE); SCHREIBER, Matthias, 74321 Bietigheim-Bissingen (DE); ZIPTER, Volker, 70435 Stuttgart (DE); ZÜRN, Michael, 71065 Sindelfingen (DE)
(74) Vertreter: JENSEN & SON
(86) Internationale Anmeldenummer: PCT/EP2011/006204
(87) Internationale Veröffentlichungsnummer: WO 2013/083145

(56) Entgegenhaltungen:
- DE-A1-102006 057 758
- DE-U1-202005 015 118
- GB-A- 2 174 686
- JP-A- 2003 137 406

## Beschreibung

Die Erfindung betrifft ein Verfahren zum Betreiben einer Produktionsanlage mit einem fahrerlosen Transportsystem.

Einzelne Arbeitsstationen von Produktionsanlagen müssen mit Bauteilen, Arbeitsmaterialien und dergleichen versorgt werden, die üblicherweise in einem separaten Lager vorgehalten werden. Üblicherweise werden hierbei an so genannten Kommissionierstationen Bauteilsätze zusammengestellt, die spezifisch für einzelne Arbeitsstationen der Produktionsanlage sind. Ein Kommissionierer holt sich hierzu die zu einem Bauteilsatz gehörigen Einzelteile aus dem Lager ab und legt sie auf einem Teileträger ab, der anschließend zu der jeweiligen Arbeitsstation transportiert wird. Solche Systeme sind sowohl arbeitsaufwändig als auch zeitraubend, da durch den jeweils notwendigen Gang zum Lager der Durchsatz einzelner Kommissionierungsstationen stark begrenzt ist. Auch die Flexibilität bekannter Verfahren ist stark eingeschränkt, so dass die Versorgung von Arbeitsstationen der Produktionsanlage mit wechselnden Arbeitsaufgaben nur schwierig zu realisieren ist, da für jede neue Arbeitsaufgabe ein anderer Bauteilsatz benötigt wird.

Eine Alternative zu dem beschriebenen System ist aus der DE 10 2006 057 758 A1 bekannt. Das dort beschriebene Verfahren betrifft ein vollständig automatisiertes Hochregallager, in welchem Teile mittels eines Vereinzelungsroboters aus dem Hochregal entnommen und auf ein autarkes Transportfahrzeug geladen werden. Das Transportfahrzeug bewegt sich anschließend zu einer Palletierstation mit einem Palletierroboter, wo die entnommenen Teile in einer gewünschten Anordnung auf einer Transportpalette angeordnet werden. Derartige Lagerhaltungssysteme weisen einen sehr hohen Durchsatz auf und können flexibel umprogrammiert werden. Die vollständige Automatisierung eines Lagerverwaltungssystems nach der beschriebenen Art ist jedoch aufwändig und führt zu hohen Investitionskosten.

Weiterhin ist in der JP 2003 137406 A ein Produktionssystem offenbart, bei dem Teile aus einem Lager mit Hilfe eines schienengebundenen Fahrzeugs zu einer Kommissionierungsstation transportiert und dort zu Teilesets kommissioniert werden. Anschließend erfolgt ein Weitertransport von dort zu den Arbeitstationen mit Flurförderzeugen.

Auch die GB 2 174 686 A zeigt ein Produktionssystem mit einer Kommissionierungsstation in Form eines provisorischen Lagers, in die Material aus dem Lager transportiert wird. Das Material wird dort zwischengelagert und von dort zu den Arbeitsstationen weitertransportiert.

Ferner zeigt die DE 20 2005 015118 U1 eine Bearbeitungsanlage mit mehreren Verteilfahrzeugen. Diese können an den Arbeitsstationen andocken, damit dort die Teile durch einen Manipulator entnommen werden können.

Der vorliegenden Erfindung liegt somit die Aufgabe zugrunde, ein Verfahren der eingangs genannten Art bereitzustellen, welches ein flexibles und kostengünstiges Kommissionieren von Teilen für eine Produktionsanlage ermöglicht.

Diese Aufgabe wird durch ein Verfahren mit den Merkmalen des Patentanspruchs 1 gelöst.

Ein solches Verfahren dient zum Betreiben einer Produktionsanlage mit einem fahrerlosen Transportsystem, welches eine Mehrzahl von Flurförderzeugen umfasst. Diese sind dazu ausgelegt, Steueranweisungen von einer Steuereinrichtung zu empfangen. Mittels wenigstens eines ersten Flurförderzeugs wird wenigstens ein erster Teileträger mit einer Mehrzahl von Teilen aus einem Lager zu einer Kommissionierungsstation transportiert. An der Kommissionierungsstation wird wenigstens ein gemäß einer Teileliste vorgegebenes Teil von dem Teileträger durch einen Arbeiter entnommen und auf einem weiteren Teileträger abgelegt. Der weitere Teileträger wird schließlich mittels eines weiteren Flurförderzeugs zu einer Arbeitsstation transportiert. Weiterhin wird die Teileliste von der Kommissionierungsstation in einer Speichereinrichtung des weiteren Flurförderzeugs und/oder des weiteren Teileträgers gespeichert.

Verglichen mit bekannten Verfahren zum Kommissionieren von Materialien kann der zeitaufwändige Gang des Arbeiters ins Lager entfallen. Stattdessen wird eine Vorauswahl von Teilen direkt zur Kommissionierungsstation angeliefert, wo die benötigten Teile sofort gemäß der Teileliste auf den weiteren Teileträger umsortiert werden können. Dies ermöglicht ein besonders schnelles Kommissionieren. Gleichzeitig ist eine flexible Anpassung des Kommissionierungsvorgangs möglich, da bei Änderungen der Produktionsanforderungen in der Produktionsanlage problemlos die Bestückung des ersten Teileträgers im Lager geändert werden kann, so dass an der Kommissionierungsstation immer die benötigte Auswahl von Teilen vorliegt.

Verglichen mit vollautomatisierten Lagerhaltungssystemen ist das erfindungsgemäße Verfahren wesentlich kostengünstiger, da aufgrund des niedrigeren Automatisierungsgrades wesentlich geringere Investitionen notwendig sind. Insgesamt wird so ein besonders flexibles und kostengünstiges und gleichzeitig einfach durchzuführendes Kommissionierungsverfahren geschaffen.

Durch die Speicherung der Teileliste von der Kommissionierungsstation in einer Speichereinrichtung des weiteren Flurförderzeugs und/oder des weiteren Teileträgers gespeichert, zweckmäßigerweise durch eine drahtlose Datenübertragung, kann das Flurtörderzeug beziehungsweise der Teileträger auf Basis der gespeicherten Teileliste dann später sowohl mit der Arbeitsstation als auch mit der Steuereinrichtung kommunizieren. Kommunikation mit der Steuereinrichtung ermöglicht es, das Flurförderzeug nach aktuellen Bedürfnissen der Produktionsanlage zu seinem Zielort zu leiten. Am Zielort angekommen, kann die Teileliste an einen Roboter der Arbeitsstation übermittelt werden, so dass dieser das Bestückungslayout des Teileträgers kennt und die Teile in der benötigten Reihenfolge entnehmen kann.

In einer bevorzugten Ausführungsform wird die Teileliste gemäß eines Produktionsumfangs der Arbeitsstation zusammengestellt. Der weitere Teileträger enthält also genau die Teile, welche die Arbeitsstation zum Erfüllen einer vorgegebenen Anzahl von Arbeitsaufgaben benötigt. Änderungen der Arbeitsaufgabe der Arbeitsstation können unmittelbar in der Kommissionierungsstation durch eine Änderung der Bestückung des weiteren Teileträgers begleitet werden, so dass ein besonders flexibles Verfahren geschaffen wird.

Die Arbeitsstation selbst kann ihren Teilebedarf an die Steuereinrichtung übermitteln. Diese kann hieraus die Teileliste bestimmen und, zweckmäßigerweise ebenfalls drahtlos, an die Kommissionierungsstation senden. So werden Änderungen im Teilebedarf der Arbeitsstation unmittelbar in eine geänderte Kommissionierung umgesetzt.

In einer weiteren bevorzugten Ausführungsform des Verfahrens wird als erster Teileträger ein Regal verwendet. Dieses kann fest auf dem fahrerlosen Flurförderzeug installiert sein oder auch temporär auf diesem befestigt werden. Ein derartiges Regal ermöglicht es, eine Vielzahl von Teilen sortiert dem Arbeiter der Kommissionierungsstation bereitzustellen.

Die fahrerlosen Flurförderzeuge der Produktionsanlage können auch über die einfache Transportaufgabe hinaus einen weiteren Zweck erfüllen. Es ist beispielsweise vorteilhaft, den weiteren Teileträger durch das weitere Flurförderzeug in einer definierten Lage an der Arbeitsstation anzudocken. Dies erleichtert das Ergreifen der auf dem weiteren Teileträger bereitgestellten Teile durch den Roboter der Arbeitsstation, da deren geometrische Lage relativ zur Basis des Roboters durch die feste Positionierung des Teileträgers sowie gegebenenfalls durch die übermittelten Daten genau bekannt sind.

Dies ist ebenfalls zweckmäßig für den Transport von zu bearbeitenden Bauteilen nutzbar. In einer bevorzugten Ausführungsform der Erfindung wird wenigstens ein solches zu bearbeitendes Bauteil mittels eines dritten Flurförderzeugs zu der Arbeitsstation transportiert und ebenfalls in einer definierten Lage zu dieser angedockt. Dies bringt das Bauteil ebenfalls in eine definierte Lagebeziehung zur Basis des Roboters, so dass dessen weitere Bearbeitung vereinfacht wird. Auch hier kann das dritte Flurförderzeug oder der dritte Teileträger zusätzlich Daten an die Arbeitsstation übermitteln. Hierbei handelt es sich zweckmäßigerweise um Informationen über das zu bearbeitende Bauteil, die in einer Speichereinrichtung des dritten Flurförderzeugs und/oder des dritten Teileträgers abgelegt sein können. Um einen höheren Teiledurchsatz zu schaffen, ist es zweckmäßig, auf dem dritten Teileträger eine Mehrzahl von zu bearbeitenden Bauteilen zu transportieren.

Im Folgenden soll die Erfindung und ihre Ausführungsformen anhand der Zeichnungen näher erläutert werden. Hierbei zeigen:
- Fig. 1: den schematischen Ablauf eines Ausführungsbeispiels eines erfindungsgemäßen Verfahrens;
- Fig. 2: eine schematische Darstellung einer Arbeitsstation einer Produktionsanlage zur Verwendung mit einem Ausführungsbeispiel eines erfindungsgemäßen Verfahrens; und
- Fig. 3: eine schematische Darstellung der Vorgänge beim Werkstück- und Materialantransport zu der Arbeitsstation gemäß Fig. 2.

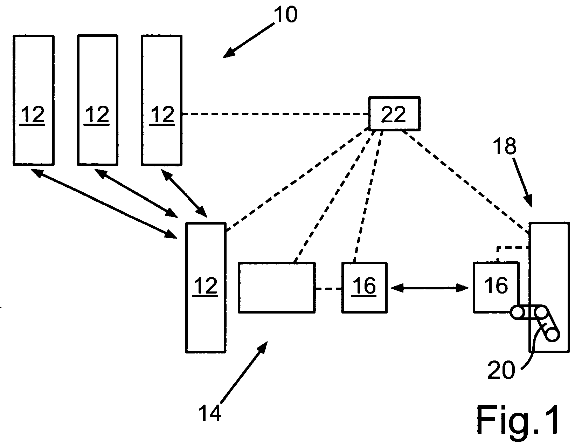

Um Bauteile, Verbrauchsmaterialien und dergleichen für eine Produktionsanlage bereit zu halten, ist ein Lager 10 vorgesehen, welches mehrere Regale 12 umfasst. Die Regale 12 sind auf in Fig. 1 nicht dargestellten autonomen Flurförderzeugen montiert und können durch eine Steuereinrichtung 22 an den gewünschten Ort bewegt werden. Die Regale 12 werden im Lager 10 vollständig bestückt vorgehalten und in Reaktion auf Bedarfsanforderungen durch die Steuereinrichtung 22 zu einer Kommissionierungsstation 14 gebracht.

An der Kommissionierungsstation 14 erhält ein Arbeiter eine Teileliste, die einer aktuellen Produktionsanforderung entspricht. Gemäß dieser Teileliste entnimmt der Arbeiter Bauteile und Materialien aus dem Regal 12 und transferiert sie auf einen weiteren Teileträger 16, der ebenfalls auf einem autonomen Flurförderzeug montiert ist. Alternativ können diese Arbeiten auch von einem Roboter übernommen werden. Bei vollständiger Bestückung des Teileträgers 16 bewegt sich das Flurförderzeug unter Anweisungen der Steuereinrichtung zu einer Arbeitsstation 18 der Produktionsanlage, wo die angelieferten Bauteile und Materialien von einem Roboter 20 verarbeitet werden. Die Arbeitsstation 18 meldet ihren Teilebedarf über ein drahtloses Kommunikationssystem an die Steuereinrichtung 22, welche daraus Teilelisten für die Kommissionierungsstation 14 generiert und an die Kommissionierungsstation 14 übermittelt. Die Steuereinrichtung 22 übermittelt ferner die momentanen Anforderungen der Kommissionierungsstation 14 an das Lager 10 und steuert die autonomen Flurförderzeuge, die die Regale 12 und Teileträger 16 transportieren. Änderungen im Produktionsauftrag der Arbeitsstationen 18 können hierdurch in kürzester Zeit flexibel an die Lagerhaltung und Kommissionierung weitergegeben werden.

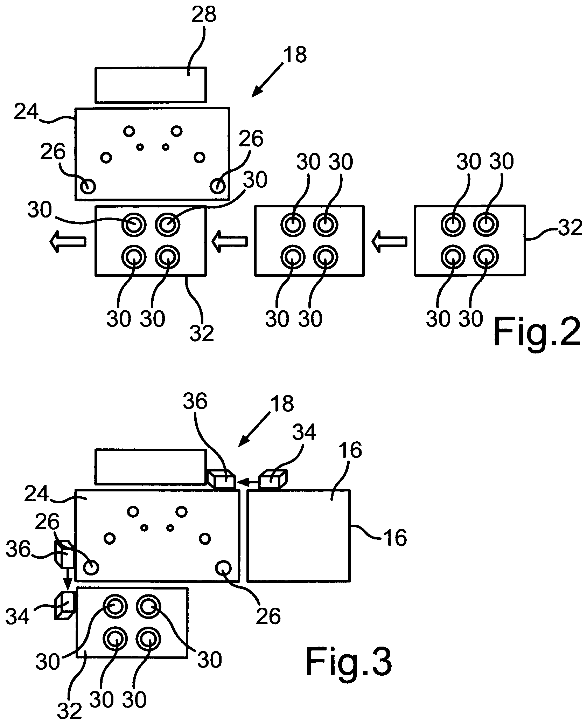

Fig. 2 zeigt die Arbeitsstation 18 im Detail. Diese umfasst einen Tisch 24, auf dem zwei Leichtbauroboter 26 montiert sind sowie eine fest installierte Presse 28. Die Bauteilträger 32 mit zu bearbeitenden Bauteilen 30 werden an die Stirnseite des Tisches 24 angeliefert, wo die zu bearbeitenden Bauteile 30 durch die Roboter 26 bearbeitet werden. Durch das Bereithalten mehrerer zu bearbeitender Bauteile 30 auf jedem Bauteilträger 32 ist eine besonders schnelle Bearbeitung der Bauteile 30 und ein hoher Bauteildurchsatz durch die Arbeitsstation 18 möglich.

Gleichzeitig wird, wie in Fig. 3 gezeigt ein weiterer Bauteilträger 16 mit Einzelteilen und Verbrauchsmaterialien zur Arbeitsstation 18 angeliefert, welcher ebenfalls am Tisch 24 andockt. Die Roboter 26 entnehmen dem Bauteilträger 16 die benötigten Materialien, um die Bauteile 30 zu bearbeiten.

In den Bauteilträgern 16 und 32 sind jeweilige Speichereinrichtungen 34 angebracht, die drahtlos mit einer Steuereinrichtung 36 der Arbeitsstation 18 kommunizieren können. Sowohl der Teileträger 16 als auch der Teileträger 32 kann hierdurch seine Bestückung und gegebenenfalls durchzuführende Aufgaben an die Arbeitsstation 18 übermitteln. Hierunter fallen Positionsangaben für die auf die Teileträger 16, 32 geladenen Bauteile und Materialien, so dass diese von den Robotern 26 problemlos ergriffen werden können. Auch die durchzuführenden Bearbeitungsschritte können in den Speichereinrichtungen 34 abgelegt werden.

Insgesamt wird so ein besonders flexibles Kommissionierungs- und Bearbeitungssystem geschaffen, das sich insbesondere für die Produktion von Gütern mit häufig wechselnden Bearbeitungsanforderungen eignet. Ein Beispiel hierfür ist der Einsatz in der Kleinserienfertigung, das System kann jedoch selbstverständlich auch in der üblichen Großserienproduktion Anwendung finden.

## Patentansprüche

1. Verfahren zum Betreiben einer Produktionsanlage mit einem fahrerlosen Transportsystem, welches eine Mehrzahl von Flurförderzeugen umfasst, welche dazu ausgelegt sind, Steueranweisungen von einer Steuereinrichtung (22) zu empfangen, mit den Schritten:
a) Transportieren wenigstens eines ersten Teileträgers (12) mit einer Mehrzahl von Teilen aus einem Lager (10) zu einer Kommissionierungsstation (14) mittels wenigstens eines ersten Flurtörderzeugs;
b) Entnehmen wenigstens eines gemäß einer Teileliste vorgegebenen Teils von dem Teileträger (12) durch einen Arbeiter oder einen Roboter und Ablegen des Teils auf einem weiteren Teileträger (16);
c) Transportieren des weiteren Teileträgers (16) zu einer Arbeitsstation (18) mittels eines weiteren Flurförderzeugs, wobei die Teileliste von der Kommissionierungsstation (14) in einer Speichereinrichtung (34) des weiteren Flurförderzeugs und/oder des weiteren Teileträgers (16) gespeichert wird.

2. Verfahren nach Anspruch 1,
**dadurch gekennzeichnet, dass**
die Teileliste gemäß eines Produktionsumfangs der Arbeitsstation (18) zusammengestellt wird.

3. Verfahren nach Anspruch 1 oder 2,
**dadurch gekennzeichnet, dass**
die Teileliste an der Arbeitsstation (18) von der Speichereinrichtung (34) an einen Roboter (20, 26) der Arbeitsstation (18) übermittelt wird.

4. Verfahren nach einem der Ansprüche 1 bis 3,
**dadurch gekennzeichnet, dass**
die Teileliste mittels der Steuereinrichtung (22) gemäß einer Bedarfsanforderung der Arbeitsstation (18) ermittelt und an die Kommissionierungsstation (14) übermittelt wird.

5. Verfahren nach einem der Ansprüche 1 bis 4,
**dadurch gekennzeichnet, dass**
als erster Teileträger (12) ein Regal verwendet wird.

6. Verfahren nach einem der Ansprüche 1 bis 5,
**dadurch gekennzeichnet, dass**
der weitere Teileträger (16) durch das weitere Flurförderzeug in einer definierten Lage an der Arbeitsstation (18) angedockt wird.

7. Verfahren nach einem der Ansprüche 1 bis 6,
**dadurch gekennzeichnet, dass**
wenigstens ein zu bearbeitendes Bauteil (30) auf einem dritten Teileträger (32) mittels eines dritten Flurförderzeugs zu der Arbeitsstation (18) transportiert und dieser in einer definierten Lage an dieser angedockt wird.

8. Verfahren nach Anspruch 7,
**dadurch gekennzeichnet, dass**
eine Information über das zu bearbeitende Bauteil (30) von einer Speichereinrichtung (34) des dritten Flurförderzeugs und/oder des dritten Teileträgers (32) an einen Roboter (26) der Arbeitsstation (18) übermittelt wird.

## Claims

1. Method for operating a production plant with a driverless transport system, which comprises a plurality of industrial trucks, which are designed to receive control instructions from a control device (22), the method comprising the steps:
a) transporting at least one first part carrier (12) with a plurality of parts from a store (10) to a commissioning station (14) by means of at least one first industrial truck,
b) removing at least one part, as stipulated on a parts list, from the part carrier (12) by a worker or a robot and placing the part on a further part carrier (16),
c) transporting the further part carrier (16) to a work station (18) by means of a further industrial truck, wherein the parts list is stored by the commissioning station (14) in a memory device (34) of the further industrial truck and / or the further part carrier (16).

2. Method according to claim 1,
**characterised in that**
the parts list is compiled according to a production range of the work station (18).

3. Method according to claim 1 or 2,
**characterised in that**
the parts list at the work station (18) is transmitted by the memory device (34) to a robot (20, 26) of the work station (18).

4. Method according to one of claims 1 to 3,
**characterised in that**
the parts list is established by means of the control device (22) according to requirements of the work station (18) and transmitted to the commissioning station (14).

5. Method according to one of claims 1 to 4,
**characterised in that**
a rack is used as a first part carrier (12).

6. Method according to one of claims 1 to 5,
**characterised in that**
the further part carrier (16) is docked by the further industrial truck in a defined position at the work station (18).

7. Method according to one of claims 1 to 6,
**characterised in that**
at least one component (30) to be processed is transported on a third part carrier (32) by means of a third industrial truck to the work station (18), being docked in a defined position at the work station.

8. Method according to claim 7,
**characterised in that**
information concerning the component (30) to be processed is transmitted by a memory device (34) of the third industrial truck and / or the third part carrier (32) to a robot (26) of the work station (18).

## Revendications

1. Procédé de fonctionnement d'une installation de production comprenant un système de transport sans conducteur, qui comporte une pluralité de chariots de manutention qui sont conçus pour recevoir des instructions de commande provenant d'un dispositif de commande (22), comprenant les étapes suivantes consistant à :
a) transporter au moins un premier porte-pièces (12) comportant une pluralité de pièces provenant d'un stock (10) vers une station de préparation de commande (14) au moyen d'au moins un premier chariot de manutention ;
b) prélever au moins une pièce prédéfinie conformément à une liste de pièces dans un porte-pièces (12) par un opérateur ou un robot et déposer la pièce sur un autre porte-pièces (16) ;
c) transporter l'autre porte-pièces (16) vers une station de travail (18) au moyen d'un autre chariot de manutention, la liste de pièces étant enregistrée par la station de préparation de commande (14) dans une mémoire (34) de l'autre chariot de manutention et/ou de l'autre porte-pièces (16).

2. Procédé selon la revendication 1, **caractérisé en ce que** la liste de pièces est composée conformément au volume de production de la station de travail (18).

3. Procédé selon la revendication 1 ou la revendication 2, **caractérisé en ce que** la liste de pièces est transmise à la station de travail (18) par la mémoire (34) au robot (20, 26) du poste de travail (18).

4. Procédé selon l'une quelconque des revendications 1 à 3, **caractérisé en ce que** la liste de pièces est définie au moyen du dispositif de commande (22) conformément à une demande de la station de travail (18) et transmise à la station de préparation de commande (14).

5. Procédé selon l'une quelconque des revendications 1 à 4, **caractérisé en ce qu'**une étagère est utilisée en tant que premier porte-pièces (12).

6. Procédé selon l'une quelconque des revendications 1 à 5, **caractérisé en ce que** l'autre porte-pièces (16) est réceptionné par un autre chariot de manutention dans une position définie au niveau de la station de travail (18).

7. Procédé selon l'une quelconque des revendications 1 à 6, **caractérisé en ce qu'**au moins une partie structurale (30) à traiter est transportée sur un troisième porte-pièces (32) au moyen d'un troisième chariot de manutention vers la station de travail (18) et est réceptionnée dans une position définie dans celle-ci.

8. Procédé selon la revendication 7, **caractérisé en ce qu'**une information relative à la partie structurale (30) à traiter est transmise par une mémoire (34) du troisième chariot de manutention et/ou du troisième porte-pièces (32) à un robot (26) de la station de travail (18).
